# EUROPÄISCHE PATENTSCHRIFT

(11) **EP 1 323 227 B1**
(45) Veröffentlichungstag und Bekanntmachung des Hinweises auf die Patenterteilung: **13.07.2005**
(21) Anmeldenummer: 01966798.9
(22) Anmeldetag: 24.09.2001
(51) Int. Cl.: H02M 3/335

(54) **SCHALTWANDLER**
SWITCHING CONVERTER
CONVERTISSEUR DE COMMUTATION

(30) Priorität: 02.10.2000 AT 16712000
(43) Veröffentlichungstag der Anmeldung: 02.07.2003
(73) Patentinhaber: Siemens AG Österreich, 1210 Wien (AT)
(72) Erfinder: WEINMEIER, Harald, A-1210 Wien (AT); KRANISTER, Andreas, A-3150 Wilhelmsburg (AT); ROTHMAYER, Thomas, A-1180 Wien (AT)
(74) Vertreter: Matschnig, Franz, Dipl.-Ing.
(86) Internationale Anmeldenummer: PCT/AT2001/000302
(87) Internationale Veröffentlichungsnummer: WO 2002/029961

(56) Entgegenhaltungen:
- US-A- 4 669 036
- US-A- 4 685 020
- US-A- 4 926 305
- US-A- 6 005 302

## Beschreibung

Die Erfindung bezieht sich auf einen Schaltwandler zur Umsetzung einer Eingangsgleichspannung in zumindest eine Ausgangsgleichspannung, bei welchem eine Primärwicklung eines Übertrages über einen gesteuerten Schalter an die Eingangsgleichspannung legbar ist, dem Schalter von einer Ansteuerschaltung ein Ansteuersignal variablen Tastverhältnisses zugeführt ist und in Abhängigkeit von sekundären und/oder primären Strömen bzw. Spannungen eine Regelung durch Änderung zumindest des Tastverhältnisses des Ansteuersignals vorgesehen ist, von zumindest einer Hilfswicklung eine interne Hilfsspannung abgeleitet ist, ein steuerbares Belastungselement für die Ausgangsspannung vorgesehen ist und zum Aus-/Einschalten der Ausgangsspannung dem Schaltwandler ein Stopsignal zuführbar ist.

Das Dokument US-A-4 685 020 zeigt eine Schaltungsanordung zum Abschalten einer Schaltwandlers im Fehlerfall. Zum Abschalten der Ausgangsgleichspannung des Schaftwandlers wird dem Schaltwandler ein Stropsignal zugeführt. Dieses Stopsignal zündet ein Belastungselement und bewirkt einen sekundärseitigen Kurzschluss des Übertragers. Dies führt zu einem Überstrom durch den primärseitigen Schalttransistor und schliesslich zu einem definierten Abschalten des Schaltwandlers.

Schaltwandler dieser Art sind in einer Vielzahl von Ausführungsformen, sei es als Sperrwandler, sei es als Flusswandler bekannt geworden. Die Ansteuerschaltung enthält meist einen Pulsweitenmodulator, dessen Tastverhältnis zum Zwecke der Regelung, insbesondere auf konstante Ausgangsspannung oder konstanten Ausgangsstrom, geändert werden kann.

Das Ein- und Ausschalten eines solchen Schaltwandlers soll oft mit Hilfe eines Stopsignals erfolgen können, das beispielsweise von einem Verbraucher ausgeht und das auf sekundärseitigem Potentialniveau liegen soll. Man kann dann mit Hilfe eines primärseitigen Schalters schalten, wenn man durch eine Optokoppler- oder eine Relaisanordnung für eine Potentialtrennung sorgt. Das Stopsignal kann jedoch auch in dem Schaltwandler selbst erzeugt werden, z. B. bei Auftreten von Fehlerzuständen, wie Kurzschlüssen etc.

Davon abgesehen, dass diese Lösung aufwendig ist, werden dadurch auch sämtliche Hilfsspannungen abgeschaltet, welche die Ansteuer- und Regelschaltungen mit Strom versorgen, was aus verschiedenen Gründen unerwünscht ist, beispielsweise wegen jener Zeit, die erforderlich ist, bis der Wandler nach einem Wiedereinschalten in einen stationären, stabilen Zustand übergeht. In solchen Fällen gewinnt man die Hilfsspannung(en) mit Hilfe unabhängiger, ständig am Netz liegender Zusatzwandler oder man kann - falls eine Potentialtrennung der Hilfsspannung vom Netz nicht erforderlich ist - eine Hilfsspannung unmittelbar vom Netz ableiten, z. B. mittels eines Längsreglers oder eines kapazitiven Spannungsteilers.

Eine Aufgabe der Erfindung liegt darin, ein Abschalten des Wandlers sekundärseitig auf Grund eines Stopsignals zu ermöglichen, ohne die Stromversorgung der Wandler-internen Steuer- und Regeleinheiten zu unterbrechen.

Diese Aufgabe wird mit einem Schaltwandler der eingangs genannten Art erreicht, bei welcher erfindungsgemäß das Stopsignal zur Anschaltung des Belastungselementes an die Ausgangsgleichspannung in einem solchen Ausmaß herangezogen ist, dass ein kurzschlussähnlicher Zustand hervorgerufen ist, in welchem die Ausgangsspannung hinreichend nahe an Null liegt, die zumindest eine Hilfsspannung für die Versorgung der ihr zugeordneten Einheiten ausreichend hoch ist.

Die Erfindung nutzt somit das Verhalten eines Schaltwandlers, der über eine Pulsweitenmodulation geregelt ist, indem ein Kurzschluss-ähnlicher Zustand herbeigeführt wird, wodurch das Tastverhältnis zwar klein wird, jedoch an einer Hilfswicklung für soviel Spannung verbleibt, dass die zugehörige Hilfsspannung die Regel/Steuereinheiten des Wandlers versorgen kann. Die am Belastungselement verbleibende Ausgangsspannung kann dabei so gering gehalten werden, dass sie für den Verbraucher de facto Null ist.

Eine vorteilhafte Variante zeichnet sich dadurch aus, dass für die Ansteuerung des Belastungselementes ein Belastungsregler vorgesehen ist, dem ein dem Ausgangsstrom betreffendes Signal zugeführt ist. Dadurch kann das Belastungselement auch als geschaltete Grundlast bei Leerlauf verwendet werden. Dabei kann es auch vorteilhaft sein, wenn dem Belastungsregler ein dem Strom durch das Belastungselement betreffendes Signal zugeführt ist.

Eine weitere Verbesserung des Schalt- bzw. Regelverhaltens lässt sich erzielen, wenn in dem durch das Stopsignal ausgelösten kurzschlussähnlichen Zustand der Ansteuerschaltung als Regelsignal die Abweichung zwischen der Hilfsspannung und einer Referenzspannung zugeführt ist.

In der Praxis ist es zweckmäßig, wenn das Belastungselement ein steuerbarer Halbleiter, insbesondere ein Transistor ist.

In manchen Fällen kann der Schaltungsaufwand verringert werden, wenn das Belastungselement mit Hilfe eines durch das Stopsignal gesteuerten Schalters an die Ausgangsspannung schaltbar ist. Besonders zweckmäßig ist es dann, wenn der gesteuerte Schalter ein Relais ist. Auch kann dann das Belastungselement einen zuschaltbaren Widerstand aufweisen.

Die Erfindung samt weiteren Vorteilen ist im folgenden an Hand von Ausführungsbeispielen näher erläutert, die in der Zeichnung veranschaulicht sind. In dieser zeigen:
- Fig. 1: eine vereinfachte Prinzipschaltung eines Schaltwandlers nach der Erfindung,
- Fig. 2: eine mögliche, einfach Realisierung eines steuerbaren Belastungselements und
- Fig. 3: eine Variante eines erfindungsgemäßen Schaltwandlers in detaillierten Darstellung.

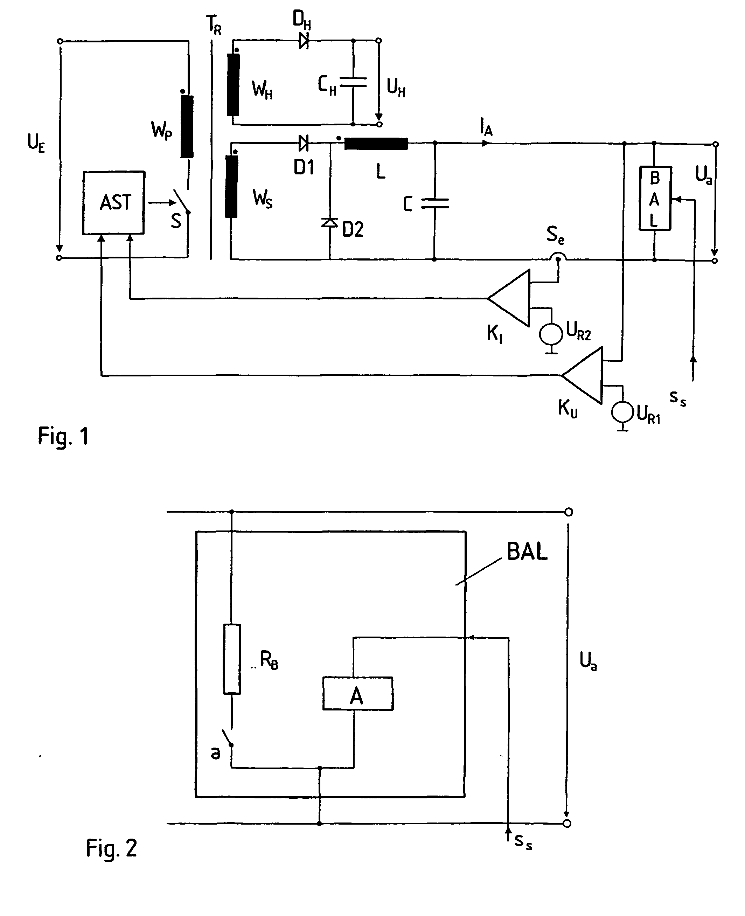

Gemäß Fig. 1 weist ein Schaltwandler nach der Erfindung einen Übertrager Tr auf, hier mit einer Primärwicklung W_{P}, einer Sekundärwicklung Ws sowie einer Hilfswicklung W_{H}. Die Primärwicklung Wp ist über einen gesteuerten Schalter S an eine Eingangsgleichspannung U_{E} legbar, die beispielsweise durch Gleichrichtung einer Netzspannung gewonnen wird. Der Schalter S wird von einer Ansteuerschaltung AST angesteuert, welche ein im wesentlichen rechteckförmiges Ansteuersignal sₛ liefert, über dessen Tastverhältnis eine Regelung insbesondere der Ausgangsspannung und/oder des Ausgangsstromes erfolgen kann.

Sekundärseitig wird die Spannung einer Sekundärwicklung Ws mittels einer Diode D1 gleichgerichtet und über eine Drossel L einem Kondensator C zugeführt, an welchem die Ausgangsgleichspannung Uₐ liegt. In bekannter Weise ist eine Freilaufdiode D2 vorgesehen. Zur Regelung der Ausgangsspannung Uₐ wird diese - oder ein Bruchteil derselben - in einem Spannungskomparator K_{U} mit einer Referenzspannung U_{R1} verglichen, und das Ausgangssignal des Spannungskomparators K_{U} der Ansteuerschaltung AST zugeführt. In ähnlicher Weise wird zur Regelung oder Begrenzung des Ausgangsstroms Iₐ das Signal eines Stromsensors Sₑ, z. B. eines Stromwandlers oder Messwiderstandes, in einem Stromkomparator K_{I} mit einer Referenzspannung U_{R2} verglichen, und auch das Ausgangssignal des Stromkomparators K_{I} wird der Ansteuerschaltung AST zugeführt.

Bei den hier gezeigten Ausführungsbeispielen sind die Schaltwandler als Flusswandler ausgeführt, doch sei betont, dass die im folgenden noch näher beschriebene Erfindung auch in Zusammenhang mit Sperrwandlem anwendbar ist.

Parallel zu der Ausgangsspannung Uₐ ist ein Belastungselement BAL vorgesehen, dem zu seiner Steuerung ein externes Stopsignal sₛ zugeführt werden kann, worauf weiter unten im Detail eingegangen wird.

Eine Hilfsspannung U_{H} wird aus einer Hilfswicklung W_{H} des Übertrages Tr durch Gleichrichtung mittels einer Diode D_{H} und Siebung durch einen Kondensator C_{H} gewonnen. Aufwendigere und geregelte Schaltungen zur Erzeugung einer Hilfsspannung werden allerdings in der Regel eingesetzt. Die Hilfsspannung U_{H}, die sowohl von der Eingangsspannung U_{E} als auch von der Ausgangsspannung Uₐ potenzial getrennt ist, kann zur Versorgung der Regel- und Steuerelektronik des Schaltwandlers eingesetzt werden oder auch anderen Zwecken dienen.

Wie bereits weiter oben erläutert, soll der Wandler bzw. dessen Ausgangsspannung Uₐ durch das Stopsignal de facto abgeschaltet werden, die Hilfsspannung soll jedoch hoch genug sein, um den für sie vorgesehenen Zweck zu erfüllen, z. B. die gesamte Steuerung und Regelung des Wandlers in Gang zu halten. Zu diesem Zweck dient das steuerbare Belastungselement BAL, das bei Anlegen des Stopsignals eine so hohe Belastung am Ausgang des Schaltwandlers erzeugen soll, dass die Ausgangsspannung Uₐ de facto Null wird, das durch die Ansteuerschaltung AST vorgegebene Tastverhältnis jedoch noch so groß bleibt, dass die Wechselspannung an der Hilfswicklung W_{H} und somit auch die Hilfsgleichspannung U_{H} groß genug bleibt.

Eine sehr einfache Realisierungsmöglichkeit zeigt Fig. 2, gemäß welcher das Belastungselement BAL aus einem Belastungswiderstand R_{B} besteht, der über einen Relaisschalter a an den Ausgang des Schaltwandlers gelegt werden kann. Das Stopsignal sₛ wird dabei einer Relaiswicklung A des Relais zugeführt. Bei Vorliegen eines Stopsignals und dem entsprechenden Schließen des Kontaktes a wird der Schaltwandler de facto in einen Kurzschluss-Zustand übergeführt, wobei der Ausgangsstrom Iₐ auf einen Maximalwert eingeregelt wird. Dazu wird der Ausgangsstrom Iₐ mittels des Stromsensors Sₑ gemessen, und in dem Komparator K_{I} mit einer Referenzspannung U_{R2}, welche den Maximalstrom festlegt, verglichen. Das Ausgangssignal des Komparators K_{I} wird der Ansteuerschaltung AST zugeführt, die in dem nun quasi vorliegenden Kurzschlussfall von der Spannungsregelung über den Komparator K_{U} auf eine Stromregelung in bekannter Weise übergeht. Auf diese Weise ist sichergestellt, dass zwar die Ausgangsspannung sehr gering ist - je nach Größe des Belastungswiderstandes R_{B} in der Größenordnung von einigen hundert Millivolt - jedoch ein Tastverhältnis erhalten bleibt, welches eine genügend hohe Hilfsspannung U_{H} gewährleistet.

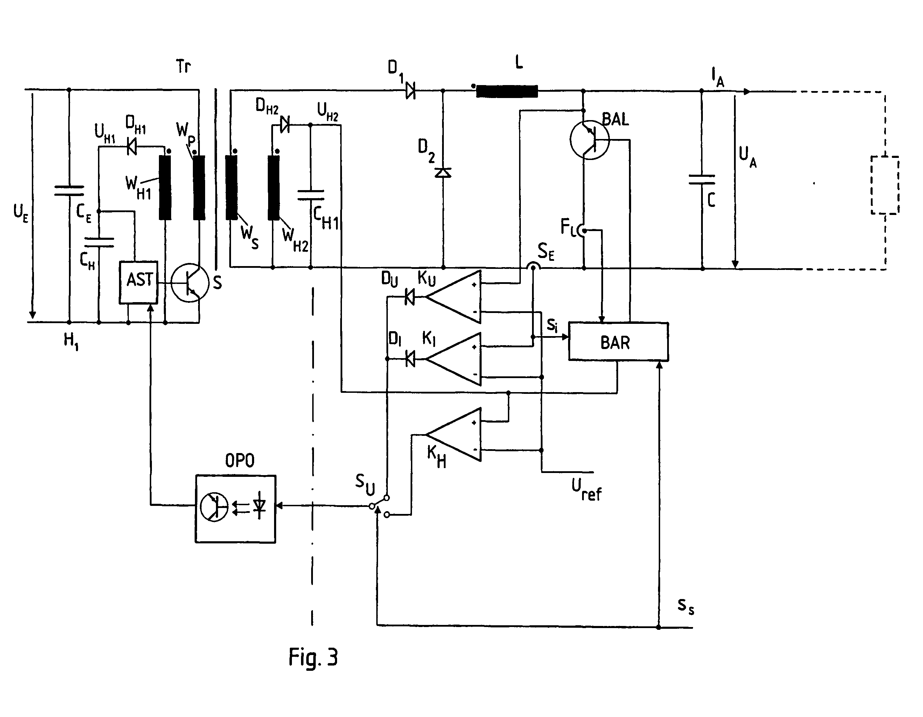

Bei der in Fig. 3 näher dargestellten zweiten Ausführungsform der Erfindung sind zusätzlich zu den bereits in Fig. 1 aufgezählten Schaltelementen noch die folgenden Einzelheiten zu erwähnen.

Die an einem Eingangskondensator C_{E} liegende Eingangsspannung U_{E} wird der Primärwicklung W_{P} über einen gesteuerten Schalter S, hier als Transistor gezeichnet, zugeführt, und die zugeordnete Ansteuerschaltung AST wird von einer Hilfsspannung U_{H1} versorgt, die durch Gleichrichtung der an einer Hilfswicklung W_{H1} liegenden Spannung mittels einer Diode D_{H1} und Siebung durch einen Kondensator C_{H1} gewonnen wird.

Sekundärseitig ist das Belastungselement BAL als Transistor ausgebildet, der mit seiner Kollektor-Emitter-Strecke parallel zu dem Ausgangskondensator C liegt. Für die Ansteuerung des Belastungselementes BAL, d. h. des Transistors, ist ein Belastungsregler BAR vorgesehen, welcher beispielsweise von einer zweiten Hilfsspannung U_{H2} versorgt wird. Diese Hilfsspannung U_{H2} wird durch Gleichrichtung der an einer Hilfswicklung W_{H2} liegenden Spannung mittels einer Diode D_{H2} und anschließender Siebung durch einen Kondensator C_{H1} gewonnen.

Wie gemäß Fig. 1 sind auch hier ein Spannungskomparator K_{U} sowie ein Stromkomparator K_{I} vorgesehen, wobei die Ausgänge dieser beiden Komparatoren K_{U} und K_{I} durch Entkopplungsdioden D_{U} und D_{I} über einen Umschalter S_{U} und ein Optokoppler OPO an die Ansteuerschaltung AST geführt werden.

Bei dieser Variante ist vorgesehen, dass bei Auftreten des Stoppsignals sₛ auf die Hilfsspannung U_{H2} geregelt wird. Überdies wird der Strom durch den Transistor des Belastungselementes BAL mit einem Stromfühlers F_{L} gemessen und den Belastungsregler BAR zugeführt, sodass auch der Strom durch das Belastungselement Berücksichtigung findet.

Zur Regelung auf die Hilfsspannung U_{H2} ist ein weiterer Komparator K_{H} vorgesehen, dessen einem Eingang die Hilfsspannung U_{H2} oder ein Bruchteil derselben zugeführt ist, wogegen dem anderen Eingang dieses Komparators - ebenso wie den jeweils anderen Eingängen der Komparatoren K_{U} und K_{I} - eine Referenzspannung U_{ref} zugeführt ist.

Mit Hilfe des durch das Stopsignal sₛ gesteuerten Umschalters sᵤ kann die Regelung von der Spannungs- bzw. Stromregelung über die Komparatoren K_{U} und K_{I} auf die Regelung auf die Hilfsspannung U_{H2} über den Komparator K_{H} umgeschaltet werden.

Wenn bei dieser Schaltung ein Stopsignal sₛ, beispielsweise von Seiten eines fernen Verbrauchers, zugeführt wird, schaltet die gesamte Regelung über den Umschalter S_{U} auf die Regelung der Hilfsspannung U_{H2} - wegen der magnetischen Koppelung natürlich auch von U_{H1} - um. Über den Transistor des Belastungselementes BAL fließt ein Strom der über den Stromfühler Fₑ mit Hilfe des Belastungsreglers BAR begrenzt wird. Überdies kann über ein Signal sᵢ, das von dem Stromsensor Sₑ stammt, ein Leerlaufzustand erkannt werden, wobei dann das Belastungselement BAL über den Belastungsregler BAR auf eine Grundlast geschaltet wird.

Auch bei dieser Variante der Erfindung ist wesentlich, dass ein kurzschlussähnlicher Zustand über das steuerbare Belastungselement BAL eingeleitet wird, sobald ein Stopsignal auftritt. Das Belastungselement, hier der Transistor am Ausgang, wird so eingestellt, dass die Ausgangsspannung genügend klein ist (für den jeweiligen Verbraucher de facto Null), und dass andererseits der Strom durch das Belastungselement nur gerade so groß ist, dass die Hilfsversorgungsspannungen ausreichend hoch sind.

Es soll auch darauf hingewiesen werden, dass Schaltnetzteile oft mehr als eine Ausgangsspannung aufweisen, nämlich zwei oder mehr galvanisch getrennte Ausgangsgleichspan nungen, von welchen zumindest eine geregelt ist. Das Belastungselement im Sinne der Erfindung kann dann an einer der Ausgangsspannung liegen, da die anderen Ausgangsspannungen über den magnetischen Kreis mitgekoppelt sind.

## Patentansprüche

1. Schaltwandler zur Umsetzung einer Eingangsgleichspannung (U_{E}) in zumindest eine Ausgangsgleichspannung (U_{A}), bei welchem eine Primärwicklung (W_{P}) eines Übertrages (Tᵣ) über einen gesteuerten Schalter (S) an die Eingangsgleichspannung (U_{E}) legbar ist, dem Schalter von einer Ansteuerschaltung (ASI) ein Ansteuersignal (sₐ) variablen Tastverhältnisses zugeführt ist und in Abhängigkeit von sekundären und/oder primären Strömen bzw. Spannungen eine Regelung durch Änderung zumindest des Tastverhältnisses des Ansteuersignals vorgesehen ist, von zumindest einer Hilfswicklung (W_{H1}, W_{H2}) eine interne Hilfsspannung (U_{H1}, U_{H2}) abgeleitet ist, ein steuerbares Belastungselement (BAL) für die Ausgangsspannung vorgesehen ist und zum Aus-/Einschalten der Ausgangsspannung dem Schaltwandler ein Stopsignal (sₛ) zuführbar ist,
**dadurch gekennzeichnet, dass**
das Stopsignal (sₛ) zur Anschaltung des Belastungselementes (BAL) an die Ausgangsgleichspannung in einem solchen Ausmaß herangezogen ist, dass ein kurzschlussähnlicher Zustand hervorgerufen ist, in welchem die Ausgangsspannung (Uₐ) hinreichend nahe an Null liegt, die zumindest eine Hilfsspannung (U_{H1}, U_{H2}) für die Versorgung der ihr zugeordneten Einheiten jedoch ausreichend hoch ist.

2. Schaltwandler nach Anspruch 1, **dadurch gekennzeichnet, dass** für die Ansteuerung des Belastungselementes (BAL) ein Belastungsregler (BAR) vorgesehen ist, dem ein dem Ausgangsstrom (I_{A}) betreffendes Signal (sᵢ) zugeführt ist.

3. Schaltwandler nach Anspruch 2, **dadurch gekennzeichnet, dass** dem Belastungsregler (BAR) ein dem Strom (iᵢ) durch das Belastungselement (BAL) betreffendes Signal (sᵢ) zugeführt ist.

4. Schaltwandler nach einem der Ansprüche 1 bis 3, **dadurch gekennzeichnet, dass** in dem durch das Stopsignal (sₛ) ausgelösten kurzschlussähnlichen Zustand der Ansteuerschaltung (AST) als Regelsignal die Abweichung zwischen der Hilfsspannung (U_{H2}) und einer Referenzspannung (U_{Ref}) zugeführt ist.

5. Schaltwandler nach einem der Ansprüche 1 bis 4, **dadurch gekennzeichnet, dass** das Belastungselement (BAL) ein steuerbarer Halbleiter ist.

6. Schaltwandler nach Anspruch 5, **dadurch gekennzeichnet, dass** das Belastungselement (BAL) ein Transistor ist.

7. Schaltwandler nach Anspruch 1, **dadurch gekennzeichnet, dass** das Belastungselement (BAL) mit Hilfe eines durch das Stopsignal (sₛ) gesteuerten Schalters (A, a) an die Ausgangsspannung (Uₐ) schaltbar ist.

8. Schaltwandler nach Anspruch 7, **dadurch gekennzeichnet, dass** der gesteuerte Schalter (A,a) ein Relais ist.

9. Schaltwandler nach Anspruch 7 oder 8, **dadurch gekennzeichnet, dass** das Belastungselement (BAL) einen zuschaltbaren Widerstand (R_{L}) aufweist.

## Claims

1. A switch mode converter for converting an input DC voltage (U_{E}) into at least one output DC voltage (U_{A}) wherein a primary winding (W_{P}) of a transformer (Tr) can be connected to the input DC voltage (U_{E}) by means of a controlled switch (S), a drive signal (sₐ) having a variable pulse duty ratio is fed to the switch by a drive circuit (AST), and, based on secondary and/or primary currents or voltages, regulation is achieved by modifying at least the pulse duty ratio of the drive signal, and an internal auxiliary voltage (U_{H1}, U_{H2}) is derived from at least one auxiliary winding (W_{H1}, W_{H2}), a controllable load element (BAL) for the output voltage is provided, and a stop signal (sₛ) can be applied to the switch mode converter for the purpose of breaking/making the output voltage;
**characterized in that**
in order to connect the load element (BAL) to the output DC voltage, the stop signal (sₛ) is applied to such a degree that a short-like condition is induced, in which the output voltage (Uₐ) is close enough to zero, but the at least one auxiliary voltage (U_{H1}, U_{H2}) is nevertheless high enough to power the units allocated to it.

2. A switch mode converter as defined in claim 1, **characterized in that** a load regulator (BAR) is provided for driving the load element (BAL), to which load regulator a signal (s₁) relating to the output current (U) is fed.

3. A switch mode converter as defined in claim 2, **characterized in that** a signal (s₁) relating to the current (i₁) passing through the load element (BAL) is fed to the load regulator (BAR).

4. A switch mode converter according to one of claims 1 to 3, **characterized in that** when the drive circuit (AST) is in the short-like condition triggered by the stop signal (sₛ), the deviation between the auxiliary voltage (U_{H2}) and a reference voltage (U_{Ref}) is implemented as the regulating signal.

5. A switch mode converter as defined in any one of claims 1 to 4, **characterized in that** the load element (BAL) is a controllable semiconductor.

6. A switch mode converter as defined in claim 5, **characterized in that** the load element (BAL) is a transistor.

7. A switch mode converter as defined in claim 1, **characterized in that** the load element (BAL) is connectable to the output voltage (Uₐ) with the aid of a switch (A, a) that is controlled by the stop signal (sₛ).

8. A switch mode converter as defined in claim 7, **characterized in that** the controlled switch (A, a) is a relay.

9. A switch mode converter as defined in claim 7 or 8, **characterized in that** the load element (BAL) comprises a resistor (R_{L}) that can be switched in.

## Revendications

1. Convertisseur de commutation pour convertir une tension continue d'entrée (U_{E}) en au moins une tension continue de sortie (U_{A}), pour lequel un bobinage primaire (W_{P}) d'un transmetteur (Tᵣ) peut être relié par un commutateur (S) commandé à la tension continue d'entrée (U_{E}), le commutateur recevant depuis un circuit de commande (AST) un signal de commande (sₐ) d'un taux d'impulsions variable, et une régulation par modification d'au moins le taux d'impulsions du signal de commande en fonction de courants ou de tensions secondaires et/ou primaires est prévue, d'au moins un bobinage auxiliaire (W_{H1}, W_{H2}) une tension auxiliaire interne (U_{H1}, U_{H2}) est déviée, un élément de charge (BAL) commandable pour la tension de sortie est prévu, et le convertisseur de commutation peut recevoir un signal d'arrêt (sₛ) pour désactiver/activer la tension de sortie,
**caractérisé en ce que** le signal d'arrêt (sₛ) pour connecter l'élément de charge (BAL) à la tension continue de sortie est utilisé de manière à provoquer un état similaire à un court-circuit dans lequel la tension de sortie (Uₐ) est suffisamment près de zéro, mais l'au moins une tension auxiliaire (U_{H1}, U_{H2}) est toutefois suffisamment élevée pour alimenter les unités lui étant associées.

2. Convertisseur de commutation selon la revendication 1,
**caractérisé en ce que** pour la commande de l'élément de charge (BAL) un régulateur de charge (BAR) est prévu qui reçoit un signal (sᵢ) concernant le courant de sortie (I_{A}).

3. Convertisseur de commutation selon la revendication 2,
**caractérisé en ce que** le régulateur de charge (BAR) reçoit un signal (sᵢ) concernant le courant (iᵢ) traversant l'élément de charge (BAL).

4. Convertisseur de commutation selon l'une quelconque des revendications 1 à 3,
**caractérisé en ce qu'**à l'état similaire à un court-circuit déclenché par le signal d'arrêt (sₛ) le circuit de commande (AST) reçoit comme signal de régulation la différence entre la tension auxiliaire (U_{H2}) et une tension de référence (U_{Ref}).

5. Convertisseur de commutation selon l'une quelconque des revendications 1 à 4,
**caractérisé en ce que** l'élément de charge (BAL) est un semi-conducteur commandable.

6. Convertisseur de commutation selon la revendication 5,
**caractérisé en ce que** l'élément de charge (BAL) est un transistor.

7. Convertisseur de commutation selon la revendication 1,
**caractérisé en ce que** l'élément de charge (BAL) peut être relié à la tension de sortie (Uₐ) à l'aide d'un commutateur (A, a) commandé par le signal d'arrêt (sₛ).

8. Convertisseur de commutation selon la revendication 7,
**caractérisé en ce que** le commutateur (A, a) commandé est un relais.

9. Convertisseur de commutation selon la revendication 7 ou 8,
**caractérisé en ce que** l'élément de charge (BAL) présente une résistance (R_{L}) pouvant être mise en circuit.
